# EUROPEAN PATENT APPLICATION

(11) **EP 1 491 981 A1**
(43) Date of publication of application: **29.12.2004**
(21) Application number: 04006857.9
(22) Date of filing: 22.03.2004
(51) Int. Cl.: G06F 1/00

(54) **Information processing apparatus and data erasure method for use in the apparatus**

(30) Priority: 26.06.2003 JP 2003182455
(71) Applicant: Kabushiki Kaisha Toshiba, Tokyo 105-8001 (JP)
(72) Inventor: Morisawa, Toshikazu, 1-1 Shibaura 1-chome Tokyo 105-8801 (JP)
(74) Representative: Henkel, Feiler & Hänzel

(57) **Abstract**

An information processing apparatus includes a storage device (106) that stores an operating system and user data. The information processing apparatus further includes a memory (109) configured to store a plurality of functions including an erasure function for erasing storage content in the storage device (106), and a unit configured to activate the erasure function in a state in which the operating system is not executed.

## Description

The present invention relates to an information processing apparatus such as a personal computer and to a data erasure method for use in the apparatus.

In general, in an information processing apparatus such as a personal computer, a data storage device such as a disk storage device is built in as a secondary storage. The operating system, application programs and user data are stored in the data storage device such as the disk storage device. When a personal computer is discarded or recycled, there is such a danger that information such as user data stored in the data storage device may leak to a third party. To prevent the leak of the information stored in the data storage device, it is necessary to securely erase all the storage contents in the data storage device, prior to discarding the personal computer or handing it to a recycling manufacturer. In this case, mere deletion of files is insufficient. It is necessary to erase the storage content of the data storage device so that it cannot be recovered.

USP 5,265,159 discloses a technique of deleting files stored on storage media so that they are not readable. Specifically, this patent teaches a system of encrypting file data stored on storage media using a random key. In this system, when a user requests deletion of a file, the user is asked as to whether he/she desires secure deletion. If the user does not desire secure deletion, a normal file delete process is executed using a file delete command of the operating system. On the other hand, if the user desires secure deletion, a secure delete process is executed by encrypting the file data with use of a random key, instead of the file delete command of the operating system.

The secure delete process, however, is a technique wherein only a file that is designated by the user is deleted in the state in which the operating system is running. This technique does not aim at securely erasing the entire storage contents of the data storage device in which the operating system is stored.

Jpn. Pat. Appln. KOKAI Publication No. 11-272562 discloses a technique of erasing the entire storage contents of a hard disk drive (HDD) in a personal computer. Specifically, Japanese KOKAI No. 11-272562 teaches a method of executing a delete program that is stored in a flexible disk (FD) by booting up the personal computer from the flexible disk.

In this method, however, a flexible disk (FD) that is dedicated to system boot-up ("boot FD") has to be provided. In addition, the delete program has to be stored in the FD. In recent years, an increasing number of so-called "FDD-less" computers, typically notebook personal computers, which are not equipped with flexible disk drives (FDDs), have been on the market. It is difficult to apply to such FDD-less computers the method of booting up the system from the FD that stores the delete program.

The object of the present invention is to provide an information processing apparatus and a data erasure method, which can erase storage contents in a storage device, without the need to boot up the information processing apparatus from a flexible disk (FD) that stores a delete program.

According to an embodiment of the present invention, there is provided an information processing apparatus comprising: a storage device configured to store an operating system and user data; a memory configured to store a plurality of functions including an erasure function for erasing storage content in the storage device; and means for activating the erasure function in a state in which the operating system is not executed.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an external appearance of a computer with a display opened, according to an embodiment of the present invention;
FIG. 2 is a block diagram showing the system configuration of the computer according to the embodiment;
FIG. 3 is a flow chart illustrating the procedure of a process that is executed by the BIOS at the time of power-on of the computer according to the embodiment;
FIG. 4 illustrates a state in which an HDD that is to be erased is selected in the computer according to the embodiment;
FIG. 5 illustrates a state in which an area that is to be erased is selected in the computer according to the embodiment;
FIG. 6 illustrates a state in which an erase data pattern is selected in the computer according to the embodiment;
FIG. 7 is a flow chart illustrating the procedure of an HDD erasure process that is executed in the computer according to the embodiment; and
FIG. 8 is a flow chart illustrating another example of the procedure of the process that is executed by the BIOS at the time of power-on of the computer according to the embodiment.

An embodiment of the present invention will now be described with reference to the accompanying drawings. To begin with, the external appearance of an information processing apparatus according to an embodiment of the invention is described. The information processing apparatus is realized as a notebook portable personal computer.

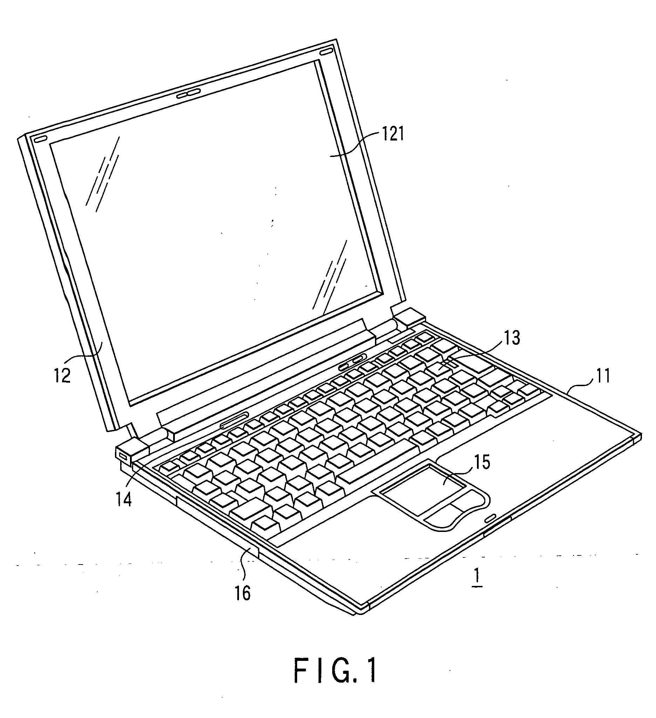

FIG. 1 is a front view of the computer in the state in which a display thereof is opened. The computer 1 comprises a computer main body 11 and a display unit 12. A display device composed of an LCD (Liquid Crystal Display) 121 is built in the display unit 12. The LCD 121 is positioned at a substantially central area of the display unit 12.

The display unit 12 is attached to be rotatable between an open position and a closed position relative to the computer main body 11. The computer main body 11 has a thin box-shaped casing. A keyboard 13, a power button 14 for powering on/off the computer 1, a touch pad 15, etc. are disposed on the upper surface of the computer main body 11. A hard disk drive (HDD) is built in the computer main body 11. The hard disk drive stores an operating system, application programs and user data.

An extension drive bay slot 16, in which a battery or a hard disk drive (second HDD) can detachably be attached, is provided on a side surface of the computer main body 11.

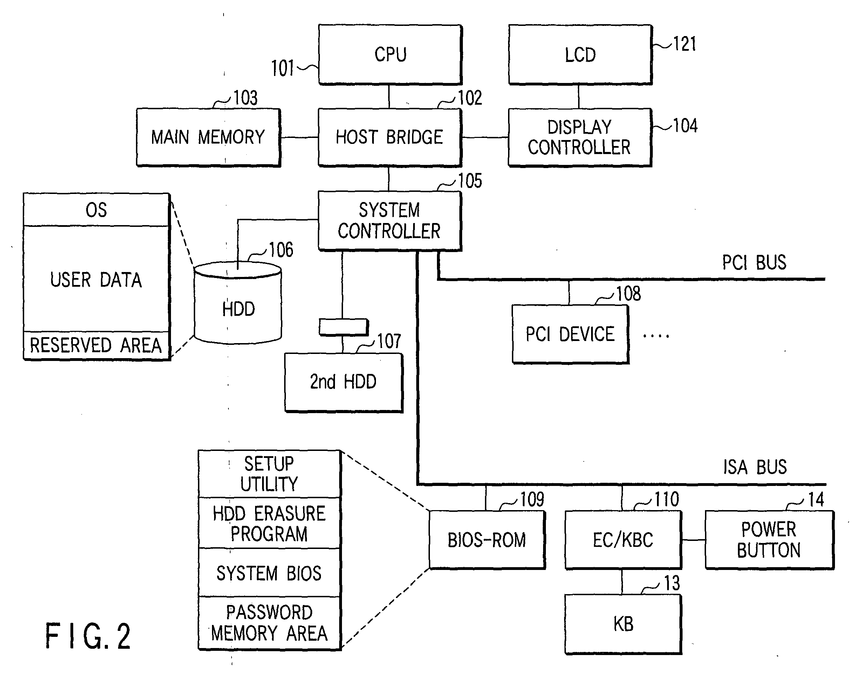

The system configuration of the computer 1 will now be described with reference to FIG. 2.

The computer 1, as shown in FIG. 2, includes a CPU (Central Processing Unit) 101, a host bridge 102, a main memory 103, a display controller 104, a system controller 105, a built-in hard disk drive (built-in HDD) 106, various PCI (Peripheral Component Interconnect) devices 108, a BIOS-ROM 109, and an embedded controller/keyboard controller IC (EC/KBC) 110.

The CPU 101 is a processor that is provided to control the operations of the computer 1. The CPU 101 executes an operating system (OS) and various application/utility programs that are loaded in the main memory 103 from the built-in HDD 106. The CPU 101 also executes a BIOS (Basic Input/Output System) that is stored in the BIOS-ROM 109. The BIOS is a program for controlling the hardware of the computer 1.

The BIOS has a hardware setup function that provides various functions relating to settings of the system configuration of the computer 1. The hardware setup function is executed by a setup utility program that is included in the BIOS. If the setup utility program in the BIOS is activated, a menu screen for selecting a plurality of functions relating to the settings of the system configuration is displayed. On the menu screen the user can designate hardware, which requires operational environment setting, and an operational environment that is to be set for the hardware.

The BIOS also has an HDD erasure function for erasing the storage contents of the built-in HDD 106 without the possibility of recovery thereof. This HDD erasure function is used to irrecoverably erase the storage contents of the built-in HDD 106 before the computer 1 is discarded or handed to a recycling manufacturer. The HDD erasure function is able to irrecoverably erase not only the storage contents of the built-in HDD 106 but also the storage contents of a second HDD 107 that is mounted in the extension drive bay slot 16. The HDD erasure function can be called from the menu screen that is provided by the above-described setup utility program.

Further, the BIOS has an HDD erasure activation function for activating the HDD erasure function in a state in which the operating system is not executed.

The BIOS-ROM 109 is composed of a nonvolatile memory such as a flash EEPROM (Electrically Erasable Programmable Read-Only Memory). The BIOS that is stored in the BIOS-ROM 108 includes, in addition to the aforementioned setup utility program, an HDD erasure program and a system BIOS. The HDD erasure program is a program for executing the above-mentioned HDD erasure function. The system BIOS is composed of a plurality of driver programs for executing initialization and access for various hardware. The BIOS-ROM 109 is provided with a password memory area. The password memory area is a memory area for storing a user verification password.

The user verification password is verification data that is called "machine password" or "power-on password." In the case where the password is registered in the computer 1, that is, where the password is stored in the password memory area of the BIOS-ROM 109, the BIOS executes a user verification process for verifying the user at the time of power-on of the computer 1. When the computer 1 is powered on, the BIOS prompts the user to type the password. If the typed password coincides with the password that is stored in the password memory area, the user is permitted to use the computer 1. On the other hand, if they do not coincide, all operations of the computer 1 are prohibited, and activation of the operating system (boot up of the operating system) and activation of the hardware setup function of the BIOS are disabled.

In the case where no password is registered in the computer 1, that is, where no password is stored in the password memory area of the BIOS-ROM 109, the user verification process is not executed. In this case, any user is permitted to activate the operating system and to activate the hardware setup function of the BIOS. However, activation of the HDD erasure function of the BIOS is prohibited. In short, only the user who has been verified as the authorized user by the user verification process is permitted to activate the HDD erasure function of the BIOS, and the HDD erasure function cannot be activated unless the password is registered in the computer 1. The user verification password may be stored in a memory device other than the BIOS-ROM 109.

The host bridge 102 is a bridge device that connects the local bus of the CPU 101 and the system controller 105. The host bridge 102 includes a memory controller that controls access to the main memory 103. The display controller 104 controls the LCD 121 that is used as a display monitor of the computer 1.

The system controller 105 controls each device on a PCI (Peripheral Component Interconnect) bus and each device on an ISA (Industry Standard Architecture) bus. The system controller 105 includes an IDE (Integrated Drive Electronics) controller for controlling the built-in HDD 106 and second HDD 107. The storage area of the built-in HDD 106 is generally divided into an operating system (OS) area, a user data area and a reserved area. The OS is stored in the OS area, and application programs and user data are stored in the user data area. The reserved area stores a recovery image for restoring the OS to the original state. Specifically, the computer 1 is shipped in the state in which the OS is preinstalled in the built-in HDD 106. The recovery image is used to restore the storage contents of the built-in HDD 106 to the original state at the time of shipment in which the OS is preinstalled.

The embedded controller/keyboard controller IC (EC/KBC) 110 is a one-chip microcomputer that integrally incorporates an embedded controller (EC) for power management and a keyboard controller (KBC) for controlling the keyboard 13 that is the input device. The embedded controller/keyboard controller IC (EC/KBC) 110 has a function of powering on/off the computer 1 in accordance with the operation of the power button 14 by the user.

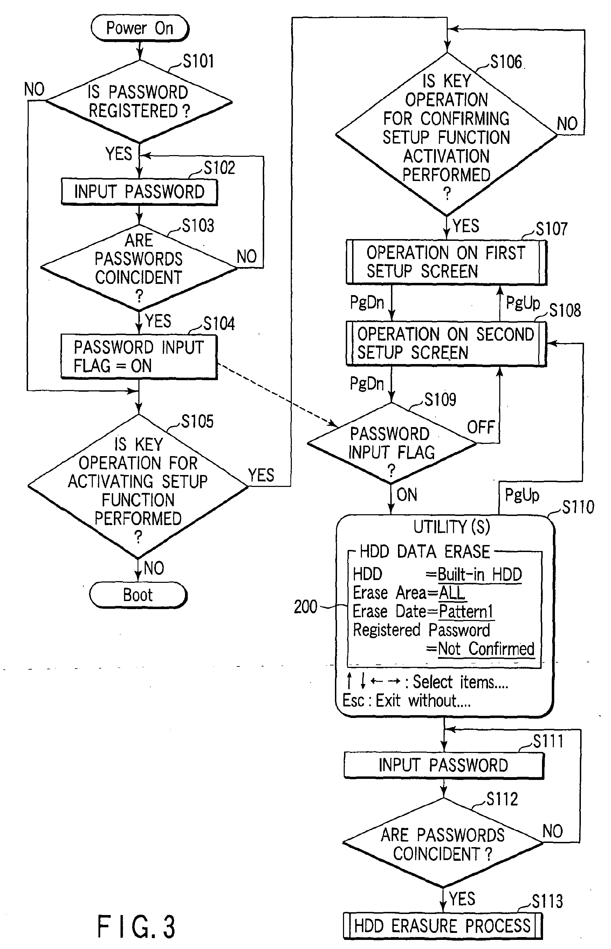

Next, referring to a flow chart of FIG. 3, a description is given of the procedure of a process that is executed by the BIOS at the time of power-on of the computer 1.

When the computer 1 is powered on, the CPU 101 first executes the BIOS. The BIOS determines whether a password is registered in the computer 1, that is, whether a password is stored in the password memory area (step S101). If a password is stored in the password memory area (YES in step S101), the BIOS causes the LCD 121 to display a message "PASSWORD=", and prompts the user to type the password (step S102). If the password is typed in, the BIOS compares the typed password and the password that is stored in the password memory area, thereby executing the user verification process for determining the current user is the authorized user (step S103). If the typed password and the password in the password memory area coincide (YES in step S103), the BIOS turns on a password input flag (step S104). In this case, "PASSWORD INPUT FLAG = ON" means that it is confirmed in the user verification process that the current user is the authorized user. If it is confirmed that the current user is the authorized user, the BIOS permits the user to use the computer 1.

On the other hand, if no password is stored in the password memory area (NO in step S101), the process in steps S102 and S103 is skipped and the user is permitted, without condition, to use the computer 1.

Then, the BIOS determines whether the user has executed, at the time of power-on, a key input operation (e.g. depression of "Esc" key) for activating the hardware setup function (step S105). If the "Esc" key is not pressed at the time of power-on (NO in step S105), the BIOS activates the operating system (boot-up the operating system or resume the operating system). On the other hand, if the "Esc" key is depressed at the time of power-on (YES in step S105), the BIOS executes the following process in order to activate the hardware setup function.

To begin with, the BIOS displays a message "Check system. Then Press [F1] key", and then determines whether the [F1] key is pressed (step S106), If the [F1] key is pressed, the BIOS displays a menu screen for hardware setup, using the setup utility program. The menu screen comprises a first screen, a second screen and a third screen. The first screen and second screen are screens for executing operational environment settings of hardware within the computer 1, and the third screen is a screen relating to the HDD erasure function. The BIOS first displays the first screen (step S107). The first screen displays a plurality of operational environment setting items relating to, e.g. the CPU operation speed, the password registration, and the order of boot priority. The user selects the operational environment setting item that is to be set, by operating arrow keys [↓] and [↑]. The user can alter the setting value of the selected operational environment setting item by operating the space key. If the [Page Down] key is pressed in the state in which the first screen is displayed, the BIOS displays the second screen (step S108). The second screen displays operational environment setting items relating to, e.g. the PCI bus and PCI devices.

If the [Page Down] key is depressed in the state in which the second screen is displayed, the BIOS determines whether the password input flag is in the ON state, that is, whether the current user is the user who is confirmed to be the authorized user by the user verification process (step S109). If the password input flag is in the ON state (YES in step S109), the BIOS displays the third screen (step S110). On the other hand, if the password input flag is in the OFF state, the display of the third screen is prohibited and the display of the second screen is continued. Thereby, only the authorized user who knows the password registered in the computer 1 can be permitted to execute the HDD erasure function. In addition, the presence of the HDD erasure function can be hidden from users other than the authorized user. Therefore, users other than the authorized user are prevented from erroneously executing the HDD erasure function.

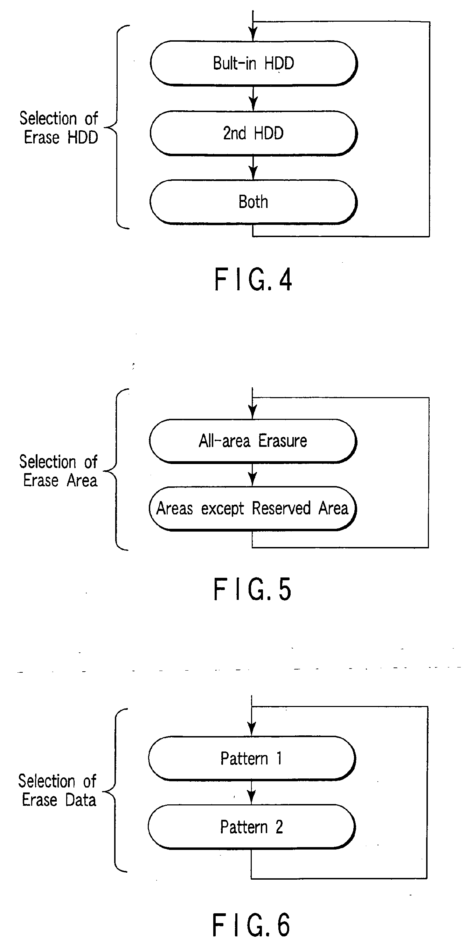

The third screen, as shown in FIG. 3, displays an HDD data erase dialogue 200 for setting the HDD erasure function. The HDD data erase dialogue 200 displays the following setting items relating to the setting of the HDD erasure function.
· HDD: This is a setting item for selecting the HDD to be erased. By pressing the space key in the state in which the cursor is positioned at the setting item "HDD", it is possible to select the to-be-erased HDD from among "Built-in HDD", "2nd HDD" and "Both", as shown in FIG. 4. If the "Built-in HDD" is selected, the HDD erasure function is set in a first erasure mode in which the storage contents of the built-in HDD are erased. If the "2nd HDD" is selected, the HDD erasure function is set in a second erasure mode in which the storage contents of the second HDD are erased. If "Both" is selected, the HDD erasure function is set in a third erasure mode in which the storage contents of both the built-in HDD and second HDD are erased.
· Erase Area: This is a setting item for selecting a to-be-erased area in the built-in HDD. By pressing the space key in the state in which the cursor is positioned at the setting item "Erase Area", it is possible to select the to-be-erased area between "All-area erasure" and "Erase of areas other than reserved area", as shown in FIG. 5. If the "All-area erasure" is selected, the HDD erasure function is set in an all-area erasure mode in which all storage areas of the built-in HDD are erased. If the "Erase of areas other than reserved area" is selected, the HDD erasure function is set in a partial-area erasure mode in which the storage areas other than the reserved area are erased.
· Erase Data: This is a setting item for selecting, e.g. the kind of a random pattern that is to be written in the HDD in order to erase the storage contents of the HDD. By pressing the space key in the state in which the cursor is positioned at the setting item "Erase Data", it is possible to select the random pattern between Pattern 1 and Pattern 2.

If the [Enter] key, for instance, is pressed after finishing the settings of the respective setting items, the BIOS prompts, once again, the user to type the password in order to acquire the user's consent to the start of the HDD erasure process (step S111). If the password is typed in through the keyboard 13, the BIOS compares the typed password and the password registered in the password memory area (step S112). If the typed password coincides with the password stored in the password memory area (YES in step S112), the BIOS activates the HDD erasure program and starts the HDD erasure process (step S113).

In this way, the HDD erasure function is activated in the state in which the operating system is not executed. In the HDD erasure process, a process of formatting the HDD and a process of writing random patterns in the HDD are executed.

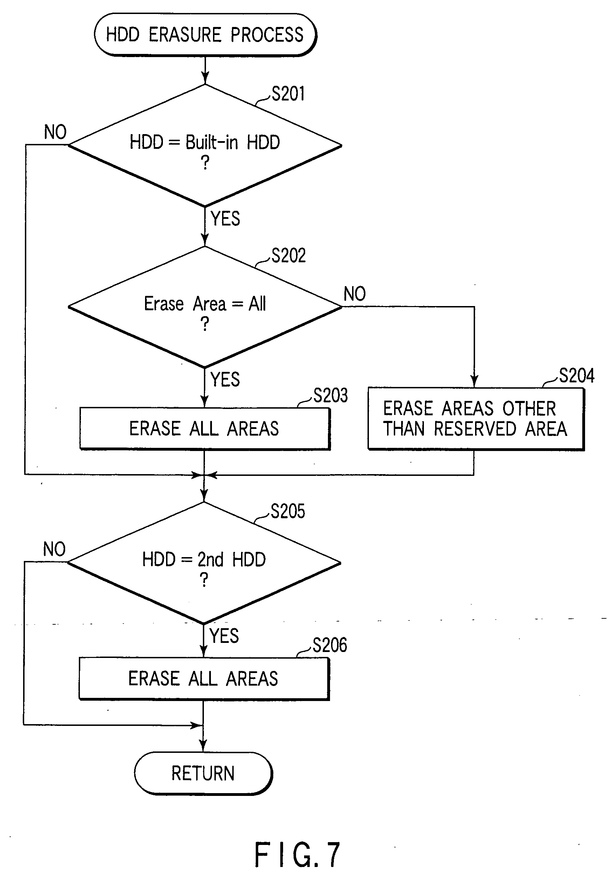

Next, referring to a flow chart of FIG. 7, a description is given of the procedure of the HDD erasure process that is executed by the HDD erasure program of the BIOS.

To start with, the HDD erasure program determines whether the built-in HDD 106 is selected as the to-be-erased HDD, on the basis of parameters that are input from the BIOS (step S201). If the built-in HDD 106 is selected as the to-be-erased HDD (YES in step S201), the HDD erasure program determines whether the to-be-erased area that is designated by the parameters input from the BIOS is all areas (All) or not (step S202). If the to-be-erased area is all areas (All) (YES in step S202), the HDD erasure program executes an erasure process for irrecoverably erasing the,storage contents in all the areas (OS area, user data area and reserved area) of the built-in HDD 106, using the HDD erasure mode that is designated by the parameters input from the BIOS (step S203). On the other hand, if the to-be-erased area is not all areas (All) (NO in step S202), the HDD erasure program executes an erasure process for. irrecoverably erasing the storage contents in the areas (OS area and user data area), other than the reserved area, of the built-in HDD 106, using the HDD erasure mode that is designated by the parameters input from the BIOS (step S204).

If the erasure process of the built-in HDD 106 is completed, the HDD erasure program determines whether the second HDD 107 (2nd HDD) is selected as the to-be-erased HDD (step S205). If the second HDD 107 is selected as the to-be-erased HDD (YES in step S205), the HDD erasure program executes an erasure process for irrecoverably erasing the storage contents in all the areas of the second HDD 107, using the HDD erasure mode that is designated by the parameters input from the BIOS (step S206).

In the second HDD erasure process, if the reserved area is set in the second HDD 107, it is possible, like the case of the built-in HDD 106, to selectively execute erasure of all the areas or erasure of the areas other than the reserved area, on the basis of the to-be-erased area that is designated by the parameters input from the BIOS.

If the built-in HDD 106 is not selected as the to-be-erased HDD (NO in step S201), the HDD erasure program skips steps S202 to S204, and goes to step S205.

As has been described above, in the computer 1, the HDD erasure function is provided in the BIOS. Thus, there is no need to prepare an FD for system activation or to separately prepare an erasure program. Since the BIOS can be executed without the operating system, the process for irrecoverably erasing the storage contents of the HDD can easily be executed, in the state in which the operating system is not running. Thus, even with the FDD-less computer, the storage contents in the built-in HDD can completely be erased by the single-body computer alone, which is not equipped with an FDD.

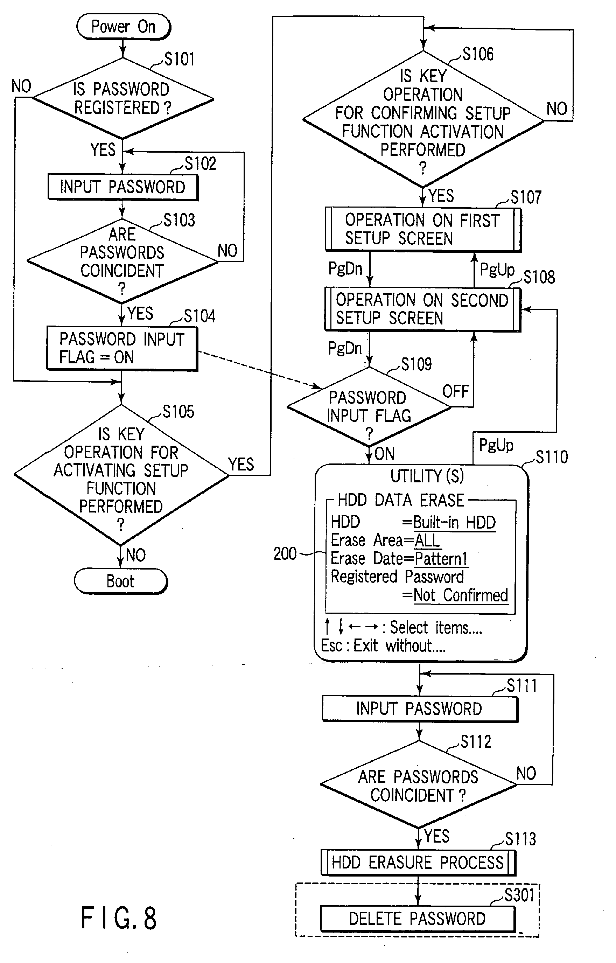

When the computer 1 is handed to a recycling manufacturer after the erasure of the built-in HDD, it is necessary to delete the password that is registered in the computer 1. If the password remains registered in the computer 1, there would be such a danger that an operation for setting the computer 1 in the recyclable state cannot be performed. It is preferable, therefore, to add step S301 after step S113, as shown in FIG. 8, thereby enabling the BIOS to execute a process for automatically deleting the password stored in the password memory area of the BIOS-ROM 109, following the completion of the HDD erasure process.

## Claims

1. An information processing apparatus **characterized by** comprising:
a storage device (106) configured to store an operating system and user data;
a memory (109) configured to store a plurality of functions including an erasure function for erasing storage content in the storage device (106); and
means for activating the erasure function in a state in which the operating system is not executed.

2. The information processing apparatus according to claim 1, **characterized in that** the means for activating the erasure function includes:
means for determining whether predetermined key data is input from an input device (13) of the information processing apparatus at a time of power-on of the information processing apparatus;
means for activating the operating system when the predetermined key data is not input;
means for displaying a menu screen for selecting a function that is to be executed, when the predetermined key data is input; and
means for activating the erasure function when the erasure function is selected on the menu screen.

3. The information processing apparatus according to claim 1, **characterized in that** the storage device (106) includes a reserved area that stores a recovery image for restoring the content of the operating system to the original state, and
the information processing apparatus further comprises means for setting the erasure function between a first mode for erasing all storage areas of the storage device (106) including the reserved area, and a second mode for erasing storage areas other than the reserved area.

4. The information processing apparatus according to claim 1, **characterized in that** the storage device (106) includes a first disk storage device that is built in the information processing apparatus, and
the information processing apparatus further comprises means for setting, when a second disk storage device (107) is mounted in the information processing apparatus, the erasure function between a first mode for erasing storage content of the first disk storage device, a second mode for erasing storage content of the second disk storage device (107), and a third mode for erasing storage contents of the first disk storage device and the second disk storage device (107).

5. The information processing apparatus according to claim 1, **characterized by** further comprising:
a memory device configured to store verification data;
an input device (13);
means for comparing verification data that is input from the input device (13) and the verification data that is stored in the memory device; and
means for prohibiting activation of the erasure function when the input verification data and the verification data that is stored in the memory device are non-coincident.

6. The information processing apparatus according to claim 1, **characterized by** further comprising:
a memory device configured to store verification data;
an input device (13); and
means for comparing verification data that is input from the input device (13) and the verification data that is stored in the memory device,
wherein the means for activating the erasure function includes:
means for displaying, when the input verification data and the verification data that is stored in the memory device are coincident, the plurality of functions including the erasure function on a menu screen for selecting a function that is to be executed; and
means for prohibiting display of the erasure function on the menu screen, when the input verification data and the verification data that is stored in the memory device are non-coincident.

7. The information processing apparatus according to claim 1, **characterized by** further comprising:
a memory device configured to stores verification data;
an input device (13);
means for determining whether the verification data is stored in the memory device at a time of power-on of the information processing apparatus;
means for executing, when the verification data is stored in the memory device, a verification process for determining whether use of the information processing apparatus by a user is permitted, on the basis of verification data that is input from the input device (13) and the verification data that is stored in the memory device;
means for enabling, when the use of the information processing apparatus is permitted, the means for activating the erasure function to activate the erasure function; and
means for deleting the verification data that is stored in the memory device, when the storage content of the storage device (106) is erased by the activated erasure function.

8. A method of erasing storage content of a storage device (106) that is provided in an information processing apparatus, the storage device (106) storing an operating system and user data, the method **characterized by** comprising:
activating an erasure function which is stored in a memory (109) that is provided in the information processing apparatus, in a state in which the operating system is not executed; and
erasing the storage content of the storage device (106) by the activated erasure function.

9. The method according to claim 8, **characterized in that** the activating of the erasure function includes:
determining whether predetermined key data is input from an input device (13) of the information processing apparatus at a time of power-on of the information processing apparatus;
activating the operating system when the predetermined key data is not input;
displaying a menu screen for selecting a function that is to be executed, when the predetermined key data is input; and
activating the erasure function when the erasure function is selected on the menu screen.

10. The method according to claim 8, **characterized in that** the storage device (106) includes a reserved area that stores a recovery image for restoring the content of the operating system to the original state, and
the method further comprises setting the erasure function between a first mode for erasing all storage areas of the storage device (106) including the reserved area, and a second mode for erasing storage areas other than the reserved area.

11. The method according to claim 8, **characterized in that** the storage device (106) includes a first disk storage device that is built in the information processing apparatus, and
the method further comprises setting, when a second disk storage device (107) is mounted in the information processing apparatus, the erasure function between a first mode for erasing storage content of the first disk storage device, a second mode for erasing storage content of the second disk storage device (107), and a third mode for erasing storage contents of the first disk storage device and the second disk storage device.

12. The method according to claim 8, **characterized by** further comprising:
comparing verification data that is input from an input device (13) of the information processing apparatus and verification data that is stored in the information processing apparatus; and
prohibiting activation of the erasure function when the input verification data and the verification data that is stored in the information processing apparatus device are non-coincident.

13. The method according to claim 8, **characterized by** further comprising:
comparing verification data that is input from an input device (13) of the information processing apparatus and verification data that is stored in the information processing apparatus,
wherein the activating of the erasure function includes:
displaying, when the input verification data and the verification data that is stored in the information processing apparatus are coincident, a plurality of functions including the erasure function on a menu screen for selecting a function that is to be executed; and
prohibiting display of the erasure function on the menu screen, when the input verification data and the verification data that is stored in the information processing apparatus are non-coincident.

14. The method according to claim 8, **characterized by** further comprising:
determining whether verification data is stored in the information processing apparatus at a time of power-on of the information processing apparatus;
executing, when the verification data is stored in the information processing apparatus, a verification process for determining whether use of the information processing apparatus by a user is permitted, on the basis of verification data that is input from an input device (13) of the information processing apparatus and the verification data that is stored in the information processing apparatus;
enabling, when the use of the information processing apparatus is permitted, said activating of the erasure function to activate the erasure function; and
deleting the verification data that is stored in the information processing apparatus, when the storage content of the storage device (106) is erased by the activated erasure function.
